# EUROPEAN PATENT SPECIFICATION

(11) **EP 4 488 840 B1**
(45) Date of publication and mention of the grant of the patent: **22.04.2026**
(21) Application number: 24185871.1
(22) Date of filing: 02.07.2024
(51) Int. Cl.: G06F 13/16, H04L 47/62, H04L 47/74, G06F 3/06

(54) **SYSTEM AND METHOD FOR MANAGING ARBITRATION AND COMMAND FETCHING**
SYSTEM UND VERFAHREN ZUR VERWALTUNG VON ARBITRIERUNG UND BEFEHLSABRUF
SYSTÈME ET PROCÉDÉ DE GESTION D'ARBITRAGE ET D'EXTRACTION DE COMMANDE

(30) Priority: 06.07.2023 US 202363512191 P; 16.01.2024 US 202418413798
(43) Date of publication of application: 08.01.2025
(73) Proprietor: Samsung Electronics Co., Ltd., Suwon-si, Gyeonggi-do 16677 (KR)
(72) Inventor: WU, Chun-Chu Chen-Jhy Archie, San Jose, CA, 95134 (US); ZHDANKIN, Vasili, San Jose, CA, 95134 (US); GAERTNER, Mark Allen, San Jose, CA, 95134 (US)
(74) Representative: Kuhnen & Wacker Patent- und Rechtsanwaltsbüro PartG mbB

(56) References cited:
- US-A1- 2017 185 542
- US-A1- 2018 349 026

## Description

### TECHNICAL AREA

The disclosure relates generally to data processing systems and, more particularly, to a method and system for optimizing command fetch operations in such systems to improve throughput performance and efficient resource allocation.

### BACKGROUND

Data processing systems are often described as comprising host systems and memory systems. The host systems are responsible for carrying out mission functions and typically operate using logical addresses, which act as an intermediary layer between the host system software and the physical memory within the memory systems. These memory systems include controller (e.g., processor) modules that translate host-level read and write requests (e.g., "fetch" requests), based on logical addresses, into a command structure including physical addresses used by the memory devices.

In cases where a host system issues a fetch request in the memory system, and the memory system is engaged in a background operation using the flash memory device at that time, the memory system may not respond immediately to the host request. In time-sensitive scenarios, such as certain types of data or command reads and status requests, this can lead to delays in executing certain functions or trigger a timeout condition, prompting the host system to respond to the timeout condition. The specific responses to timeouts vary depending on the nature of the mission function and can have a significant impact on host system performance.

To address this issue, it is desirable to develop a controller that can prevent delays and timeout conditions at the host level. For example, technologies such as multi-command fetch have been developed to address a slow arbitration turnaround time issue and to meet device throughput performance requirements. However, these technologies focus primarily on throughput performance without adequately addressing other aspects of the system, such as power consumption, transfer overhead, and resource allocation plans.

US 2018/349026 A1 discloses a system and method for adaptive command fetch aggregation.

US 2017/185542 A1 discloses arbitration of requests requiring a variable number of resources.

### SUMMARY

The invention is set out in the appended set of claims. The present disclosure has been made to address at least the disadvantages described above and to provide at least the advantages described below.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1A is a block diagram illustrating a minimum command fetching system, according to an embodiment;
FIG. 1B is a block diagram illustrating a host performing a device fetch command, according to an embodiment;
FIG. 2 is a timing diagram comparing an ideal timing scenario with an actual timing scenario, according to an embodiment;
FIG. 3 is a timing diagram comparing burst, pipeline, and concurrent timing solutions, according to an embodiment;
FIG. 4 is a block diagram illustrating arbitration selection using a minimum fetch threshold, according to an embodiment;
FIG. 5 is a flowchart illustrating arbitration selection using a minimum fetch threshold, according to an embodiment;
FIG. 6 is a timing diagram illustrating arbitration selection using a minimum fetch threshold, according to an embodiment;
FIG. 7 is a block diagram illustrating a host performing a device fetch command, according to an embodiment;
FIG. 8 is a timing diagram illustrating a multi-channel requestor scenario, according to an embodiment; and
FIG. 9 is a block diagram illustrating an electronic device in a network environment, according to an embodiment.

### DETAILED DESCRIPTION

Hereinafter, embodiments of the present disclosure are described in detail with reference to the accompanying drawings. It should be noted that the same elements will be designated by the same reference numerals although they are shown in different drawings. In the following description, specific details such as detailed configurations and components are merely provided to assist with the overall understanding of the embodiments of the present disclosure. In addition, descriptions of well-known functions and constructions are omitted for clarity and conciseness. The terms described below are terms defined in consideration of the functions in the present disclosure, and may be different according to users, intentions of the users, or customs. Therefore, the definitions of the terms should be determined based on the contents throughout this specification.

Although the terms including an ordinal number such as first, second, etc. may be used for describing various elements, the structural elements are not restricted by the terms. The terms are used to distinguish one element from another element. For example, without departing from the scope of the present disclosure, a first structural element may be referred to as a second structural element. Similarly, the second structural element may also be referred to as the first structural element. As used herein, the term "and/or" includes any and all combinations of one or more associated items.

The terms used herein are merely used to describe various embodiments of the present disclosure but are not intended to limit the present disclosure. Singular forms are intended to include plural forms unless the context clearly indicates otherwise. In the present disclosure, it should be understood that the terms "include" or "have" indicate existence of a feature, a number, a step, an operation, a structural element, parts, or a combination thereof.

Unless defined differently, all terms used herein have the same meanings as those understood by a person skilled in the art to which the present disclosure belongs. Terms such as those defined in a generally used dictionary are to be interpreted to have the same meanings as the contextual meanings in the relevant field of art, and are not to be interpreted to have ideal or excessively formal meanings unless clearly defined in the present disclosure.

The electronic device according to one embodiment may be one of various types of electronic devices utilizing storage devices. The electronic devices may include, for example, a portable communication device (e.g., a smart phone), a computer, a portable multimedia device, a portable medical device, a camera, a wearable device, or a home appliance. According to one embodiment of the disclosure, an electronic device is not limited to those described above.

With regard to the descriptions of the accompanying drawings, similar reference numerals may be used to refer to similar or related elements. A singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, terms such as "1^{st}," "2^{nd}," "first," and "second" may be used to distinguish a corresponding component from another component, but are not intended to limit the components in other aspects (e.g., importance or order). It is intended that if an element (e.g., a first element) is referred to, with or without the term "operatively" or "communicatively", as "coupled with," "coupled to," "connected with," or "connected to" another element (e.g., a second element), it indicates that the element may be coupled with the other element directly (e.g., wired), wirelessly, or via a third element.

As used herein, the term "module" may include a unit implemented in hardware, software, firmware, or combination thereof, and may interchangeably be used with other terms, for example, "logic," "logic block," "part," and "circuitry." A module may be a single integral component, or a minimum unit or part thereof, adapted to perform one or more functions. For example, according to one embodiment, a module may be implemented in a form of an integrated circuit (IC).

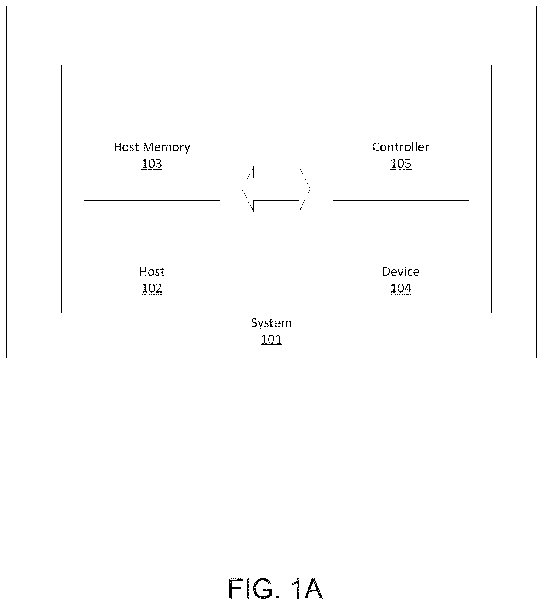

FIG. 1A is a block diagram illustrating a minimum command fetching system, according to an embodiment.

Referring to FIG. 1A, the minimum command fetching system 101 may be an electronic device and includes a host 102 having a host memory 103, and a device 104 having a controller 105. The host 102 may communicate with the device 104 through a wire or wirelessly. Other structural components may also be included (e.g., the host 102 may include a controller and/or the device 104 may include a memory).

The minimum command fetching system is designed to optimize data retrieval and transfer between the host 102 and the device 104 while minimizing latency and resource utilization.

The host 102 is a computing entity that initiates and manages data fetch operations. The host 102 may be a computer, server, or any device that requires data from an external device. The device 104 may refer to peripheral or external hardware that stores or provides the data requested by the host. This can include storage devices (e.g., hard drives, solid state drives (SSDs)), network devices (e.g., routers or switches), or other specialized hardware.

The host has a memory 103 that stores data temporarily during the fetching process, which may include random access memory (RAM) and cache memory.

"Read" refers to the process of retrieving data from a peripheral or external device by the host 102 (usually a computer or a central processing unit) in response to specific requests or command requests. This process involves the host 102 sending a read command request to the device 104 to provide a certain amount of data or execute a particular operation, and the device 104 responding by supplying the requested data or performing the required action. "Fetch" refers to the process of retrieving the command request.

A minimum fetch threshold (also referred to as "N" or "n") is a parameter that defines the minimum number of data units or commands that need to be fetched in a single operation.

A completion queue (CQ) is a buffer or data structure that device 104 uses to respond to the command request from host 102 when it is completed. Device 104 posts the CQ entries to the CQ stored in host memory 103 to allow the host 102 retrieve them.

A submission queue (SQ) is another data structure that holds data retrieval commands as one or more requests are sent from the host 102 to the device 104. It may include information about the priority and sequence of data fetch requests. Host 102 posts commands as SQ entries the SQ stored in host memory 103. The device 104 may fetch the commands stored in the SQ as SQ entries.

Arbitration logic may be included as a component responsible for deciding which data request to prioritize when multiple requests are pending to help ensure efficient resource allocation.

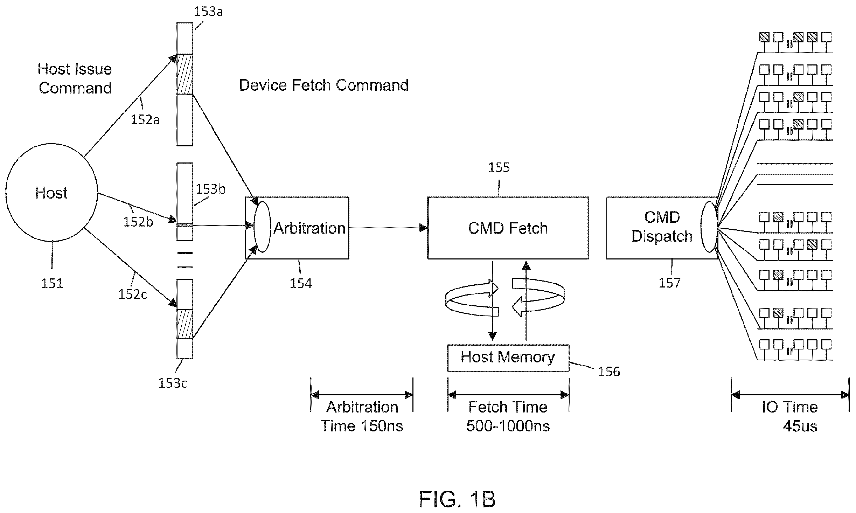

FIG. 1B is a block diagram illustrating a host performing a device fetch command, according to an embodiment.

Referring to FIG. 1B, a host 151 may issue commands 152a, 152b, and 152c to submission queues in different channels 153a, 153b, and 153c. A device may determine which channel to obtain a command from using arbitration 154. Arbitration is a process where multiple requests or commands compete for a shared resource, and a decision is made to determine which one gets access to that resource. This arbitration step may take a first amount of time, such as 150 nanoseconds (ns). Once it is determined which command is to be obtained at block 154, command ("CMD" in FIG. 1) fetch 155 is performed to access an address of the host memory 156 included in the host 151. Accessing the host memory 156 address may take a second amount of time, such as 500-1000 ns. Furthermore, at block 157, command dispatch is performed to execute the command obtained from the host memory 156 address, indicating active and inactive input/output (IO) blocks. Accordingly, the first amount of time (e.g., an arbitration time) is smaller than the second amount of time (e.g., a fetch time). In addition, an IO time to execute a read/write command may be 45 microseconds (us), which is greater than the first amount of time and the second amount of time.

The amount of time available for executing commands may be determined and/or limited by the integrated circuit (IC) (e.g., a peripheral component interconnect express (PCIe)6x4) (e.g., 8 mobile IO ports (MIOPS)). For example, a command processing performance may be 125 ns per each 4 kilobyte (KB) command. In such a case, if the arbitration 154 takes a duration of 150 ns, then the system may inefficiently execute commands, since the IC execution time (e.g., 125 ns) is smaller than the arbitration time (e.g., 150 ns). Ideally, the arbitration time should be slightly less than the IC execution time for optimal system performance.

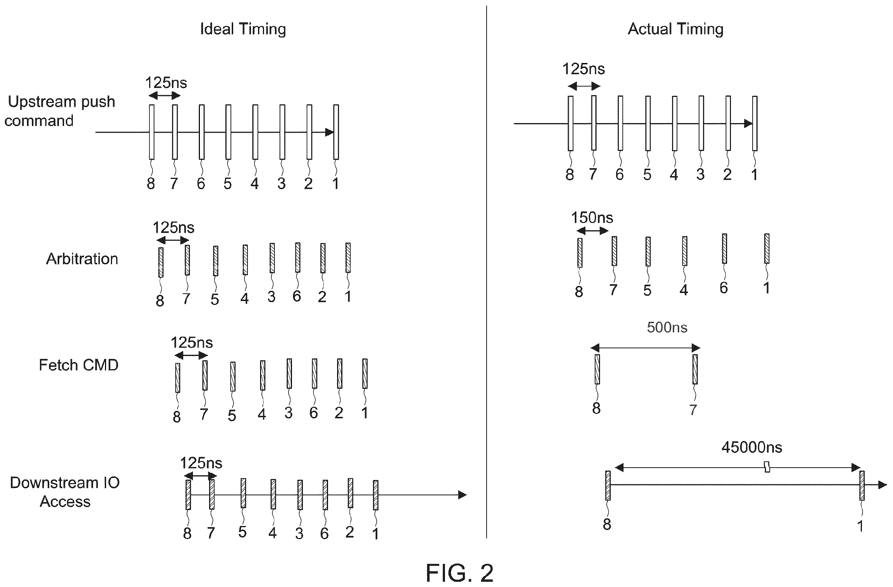

FIG. 2 is a timing diagram comparing an ideal timing scenario with an actual timing scenario, according to an embodiment.

Referring to FIG. 2, if an upstream push command to a channel is 125 ns (e.g., corresponding to a command processing performance of 125 ns per each 4 KB command), then an ideal arbitration time should be <125 ns. Also, a fetch time should be <<125 ns, and a downstream IO time should be <<<125 ns. However, in practice the arbitration time may be 150 ns, which is slightly larger than the ideal arbitration time. Also, the fetch time may be 1000 ns, and the IO time may be 45000 ns. Thus, various solutions are proposed to output commands whose timing is more similar to the ideal timing scenario than the actual timing scenario.

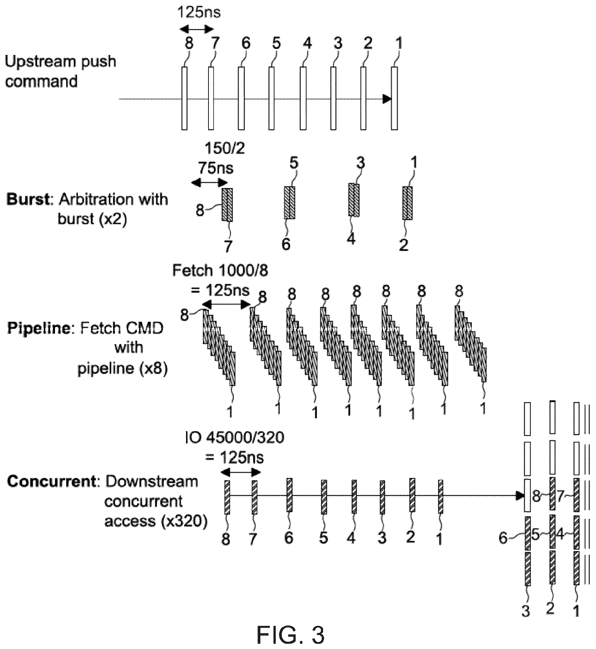

FIG. 3 is a timing diagram comparing burst, pipeline, and concurrent timing solutions, according to an embodiment.

Referring to FIG. 3, eight upstream commands are pushed to a channel at approximately 125 ns intervals.

A burst solution involves processing multiple commands at one time in a short burst, which can help increase throughput while minimizing resource allocation inefficiencies. Instead of fetching and processing one command at a time, a burst solution involves grouping a set of related commands or tasks and processing them together in a single burst. This reduces the overhead of initiating and completing each command individually.

As shown in FIG. 3, for the burst solution, a set of two commands may be pushed at 150 ns intervals. Thus, an arbitration time for each command may be equivalent to approximately 75 ns.

A pipeline solution breaks down a process into multiple stages, each of which can handle one command at a time. This allows for continuous processing of commands without waiting for the entire process to complete before starting the next one. Commands are divided into sequential stages, with each stage responsible for a specific part of the process. Once a stage completes its task for a command, it passes the command to the next stage in the pipeline. In this manner, command fetching may be continuously performed without waiting for a prior command to finish being executed.

As shown in FIG. 3, for the pipeline solution, a set of eight commands may be fetched from a channel at 1000 ns intervals. Thus, a time for fetching each command may be equivalent to approximately 125 ns.

A concurrent solution involves splitting a process into multiple concurrent units, each capable of handling its own command independently. This can further enhance throughput and resource utilization. Multiple execution units or cores are used, each capable of executing commands independently. Commands are distributed among these units, allowing them to work concurrently.

As shown in FIG. 3, a time for fetching each downstream concurrent access command may be 125 ns.

Although the burst solution, pipeline solution and concurrent solution may enhance device throughput performance while addressing concerns like power consumption, transfer overhead, and resource allocation plan, the pipeline solution and the concurrent solution may not be used with arbitration.

The pipeline solution may not be used with arbitration because arbitration cannot be easily broken down into independent stages or pieces because the end result of arbitration, which determines the winner among competing requests, is a critical and indivisible decision. In other words, the arbitration process cannot be split into stages because the final outcome is dependent on the entire process. In addition, the decision made during arbitration, such as selecting one request (issue command) over others, directly impacts the subsequent arbitration process. The winner and the evaluated burst size from the previous arbitration can affect which requests are competing in the next round. This interdependence makes it challenging to implement a traditional pipeline structure where stages operate independently.

Arbitration cannot practically be applied to the concurrent solution because concurrent arbitration can lead to interference between different groups of requests. The end result of one group's arbitration process can affect the outcome of another group's process. This interference makes it difficult to maintain fairness and predictability in resource allocation. In addition, implementing concurrent arbitration can be expensive in terms of hardware cost and power consumption. Running multiple arbitration processes concurrently requires additional hardware resources, which can increase both the cost and power consumption of the system.

Although the burst solution can be used with arbitration, the burst solution doesn't guarantee that every fetch operation will include a satisfactory number of commands. Sometimes, only a single command might be fetched, especially when the commands are not contiguous or there's a gap in the sequence. This inefficiency can result in underutilization of available bandwidth. Additionally, fetching commands one at a time, known as single access, can be inefficient in terms of bandwidth utilization. Each single fetch consumes resources but doesn't make full use of the available data transfer capacity. In addition, single fetches, being less efficient, can lead to excess power consumption because the system is continuously starting and stopping fetch operations, which can be power-intensive. Furthermore, the overhead associated with initiating fetch operations, such as address calculations and control signaling, reduces the effective available bandwidth in shared resources like a PCIe bus. Additionally, burst fetches can cause resource allocation planning to fluctuate between fetching multiple commands at once and fetching just one. This variability can make it challenging to allocate resources efficiently and predictably.

Thus, while burst fetches can help meet bandwidth requirements in arbitration, they have drawbacks, including inefficiencies when fetching single commands, excess power consumption, and fluctuations in resource allocation planning. These issues can impact overall system performance and resource utilization.

Accordingly, the present application proposes proactively bundling fetches based on a minimum threshold and/or timer. This incorporates the burst solution, discussed above, but additionally includes steps to proactively bundle the commands into bursts so as to efficiently utilize system resources.

Thus, burst fetch may be used as the standard and most commonly used behavior during arbitration for improved efficiency.

To encourage burst fetch as the default behavior, a "min-fetch threshold" is introduced. This threshold represents the minimum number of commands or resources that must be accumulated before a burst fetch is executed.

Burst fetch operations may only be triggered when the accumulated commands or resources are greater than or equal to the min-fetch threshold. This means that if there are not enough upstream commands waiting to be fetched or there are not enough downstream resources (e.g., downstream buffer space to receive, queue, and process on or more commands, or one or more parses to receive commands), the system will defer (or wait), and not initiate a burst fetch until enough upstream commands are accumulated or enough downstream resources become available, thereby consistently maintaining more efficient command handling.

If one channel or source of commands is idle or slow to accumulate a number of commands that is greater than or equal to a number of commands necessary to meet the min-fetch threshold, it could lead to a situation where the system waits indefinitely for that slow channel to catch up, even if other channels have commands available to fetch.

To address the issue of waiting indefinitely for a slow channel, a wait timer is introduced as a remedy. The wait timer may be set based on the average time for accumulating the necessary number of commands required to meet the min-fetch threshold. If a particular channel or source is below the min-fetch threshold and has not accumulated enough commands within a predetermined time, the system activates the wait timer.

The wait timer sets a maximum duration for waiting. If a predetermined number of commands is not obtained within this time frame, the system proceeds with the burst fetch using the available commands from other sources, ensuring that the system does not wait excessively for a slow channel.

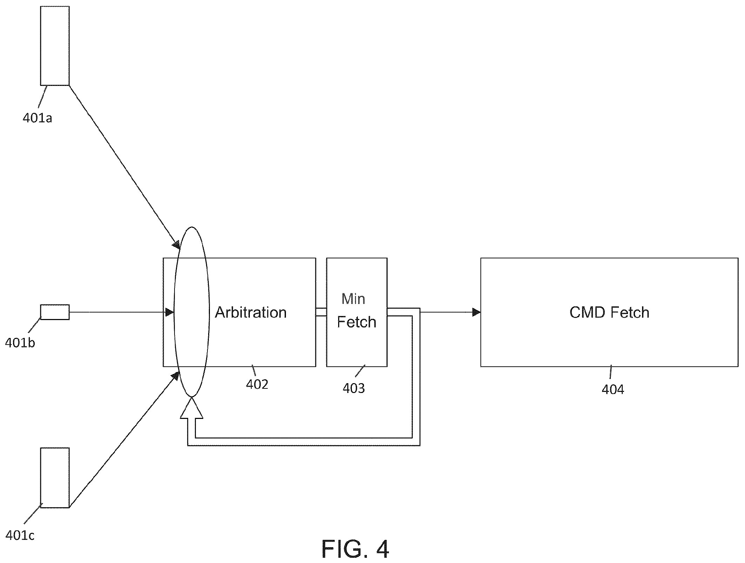

FIG. 4 is a block diagram illustrating arbitration selection using a minimum fetch threshold, according to an embodiment.

Referring to FIG. 4, commands may be issued from channels 401a, 401b, and 401c. At block 402, arbitration is performed. The wait timer is initialized, and once the number of commands for arbitration is greater than or equal to the min-fetch threshold at block 403, the commands is transmitted as a burst to CMD fetch block 404 for execution. However, if the wait timer reaches a predetermined duration (or expires) prior to the number of commands and/or the device resource being greater than or equal to the min-fetch threshold at block 403, then the available commands, which may be limited by the available device resources, are transmitted to CMD fetch block 404 for execution.

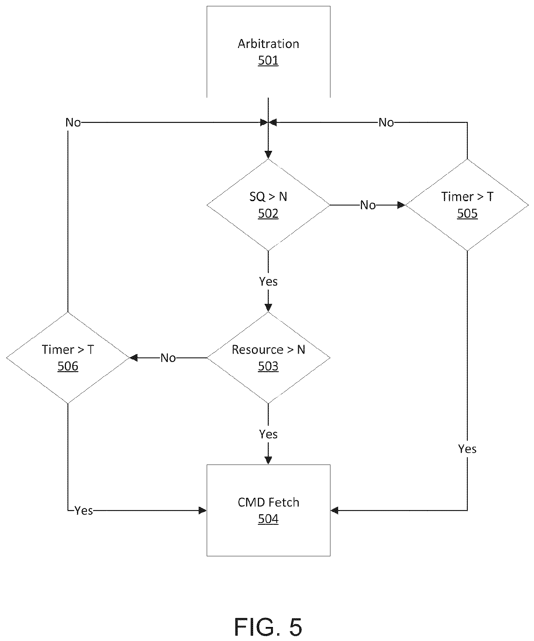

FIG. 5 is a flowchart illustrating arbitration selection using a minimum fetch threshold, according to an embodiment.

Referring to FIG. 5, at step 501, the arbitration selection process is initialized. At step 502, a number of commands in a channel (SQ) is compared to a minimum fetch threshold N (min-fetch threshold). N may be a predetermined number for efficient transfer as well as meeting power and overhead saving that is a multiple of a host issue command (e.g., 2, 3, etc..).

The multiple of the host issue command may be an integer that reduces the overall power consumption required for fetching by the multiple integer amount (e.g., if the predetermined number is 2, then power consumption may be reduced by 50%). However, the higher the frequency the clock, the power consumption tends to proportionally increase. In addition to power reduction, the multiple of the host issue command may reduce the overhead bandwidth required for transmitting data requests because the multiple of the host issue command enables for multiple pieces of data to be transmitting for each command.

If SQ is greater than N (yes in step 502), then at step 503, a downstream resource is compared to N. In step 503, the downstream resource may represent a downstream resource number. If the downstream resource is greater than N (yes in step 503), then CMD fetch is performed in step 504, and a fetch burst is transmitted. Therefore, according to the method described above, both a downstream resource number (downstream resource in step 503) and an upstream command number (SQ in step 502) should meet a minimum fetch threshold (N in steps 502 and 503) to start the CMD fetch operation in step 504. On the other hand, in step 502, if SQ is not greater than N (no in step 502), a timer is compared to T in step 505, where T is a predetermine wait time. T may be calculated based on a time for fetching a minimum number of commands. Since a system's clock may run slightly faster or slower than a time for fetching a command, a roundup time may be used.

For example, T can further be rounded up to an integer that is a multiple of an arbitration roundup time (e.g., T = (150* $ROUNDUP( (2x125ns)/150n) = 300 ns). The timer is initialized at step 501, and may be reset after CMD fetch is executed at step 504. If the timer is greater than T (yes in step 505), then CMD fetch is executed at step 504. Otherwise, if timer is not greater than T (no in step 505), then arbitration continues, and step 502 may be performed once again. Additionally, at step 503, if resource is not greater than N (no in step 503), then timer is compared to T in step 506, where T is the predetermine wait time. The timer is initialized at step 501, and may be reset after CMD fetch is executed at step 504. If the timer is greater than T (yes in step 506), then CMD fetch is executed at step 504. Otherwise, if timer is not greater than T (no in step 506), then arbitration continues, and step 502 may be performed once again.

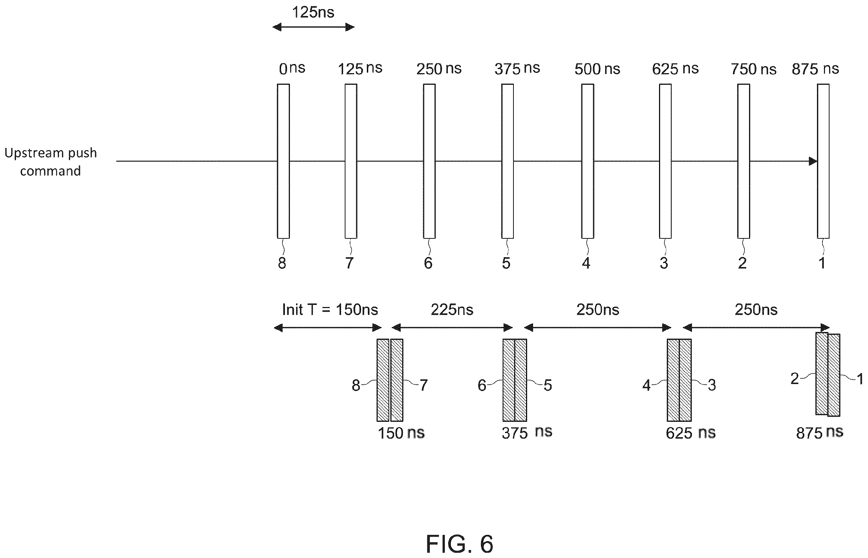

FIG. 6 is a timing diagram illustrating arbitration selection using a minimum fetch threshold, according to an embodiment.

Referring to FIG. 6, an upstream push command to a channel (e.g., SQ) is issued at a predetermined time period of 125 ns. The 125 ns time period may be a function of the command processing performance of the system (e.g., PCIe6x4 having 125 ns per 4 KB command). As shown in FIG. 6, the arbitration latency (Init T = 150 ns) is a greater time period than the upstream push command time period (125 ns). Using arbitration selection based on the minimum fetch threshold, commands are bunched and transmitted at ideal timing instances to most efficiently use system resources. For example, commands 8 and 7 are bunched and transmitted at 150 ns, which is the arbitration latency. Commands 6 and 5 are bunched and transmitted at 375 ns, which corresponds to the next available upstream push command after the arbitration latency for a second command (150 ns + 150 ns = 300 ns rounded up to 375 ns). Similarly, commands 4 and 3 are bunched and transmitted at 625 ns, which corresponds to the next available upstream push command after the arbitration latency for a third command (375 ns + 150 ns = 525 ns rounded up to 625 ns). Commands 2 and 1 are bunched and transmitted at 875 ns, which corresponds to the next available upstream push command after the arbitration latency for a fourth command (625 ns + 150 ns = 875 ns (no need to round up since an upstream push command occurs at 875 ns)).

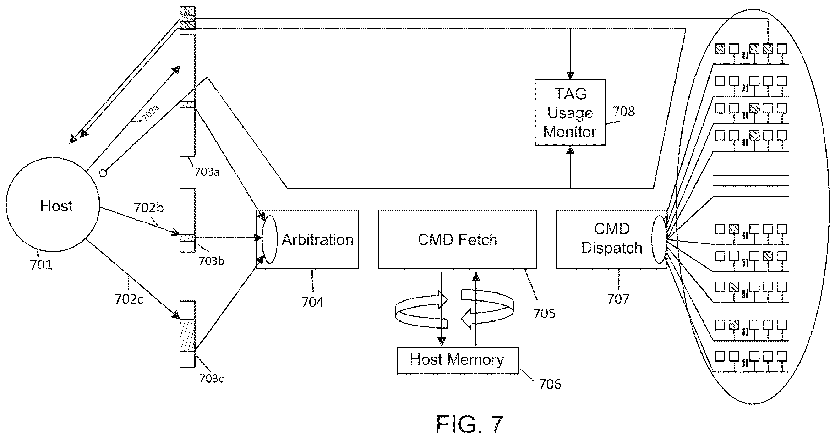

FIG. 7 is a block diagram illustrating a host performing a device fetch command, according to an embodiment.

Referring to FIG. 7, a host 701 may issue commands 702a, 702b, 702c to submission queues in different channels 703a, 703b, and 703c. A device may determine which channel to obtain a command from using arbitration 704. Once it is determined which command is to be obtained at block 704, command ("CMD" in FIG. 7) fetch 705 is performed to access an address of the host memory 706 included in the host 701. Furthermore, at block 707, command dispatch is performed to execute the command obtained from the host memory 706 address, indicating active and inactive IO blocks. Command dispatch at block 707 may include parsing and translation to determine an amount of available downstream resources to receive commands. In practice, it may be necessary to fill a downstream buffer with enough downstream resources before dispatching.

Additionally, FIG. 7 includes a tag usage monitor 708 capable of making decisions about how data should be fetched based on a "Host_QD" (host queue depth) statistic and other conditions such as timestamps and availability values. The system may adjust the fetch operation accordingly to optimize data transfer while considering the host's capacity.

Host_QD represents the number of outstanding requests or commands that a host can send to a peripheral or storage device. A time stamp of an instruction issued by the host 701 is compared to a time stamp of a device fetch command to obtain Host_QD. When Host_QD is less than a certain value N, the minimum fetch operation should be disabled or reduced. Thus, if the host's queue depth is insufficient, the fetch operation should be limited to prevent the system from not being able to accumulate enough commands to perform a fetch and the timer remaining in an expired state.

Additionally, the size of a burst can be adjusted (increased or decreased) based on whether a previous fetch (e.g., an executed fetch) timed out (e.g., due to a null operation) and/or if the previous fetch is greater than a minimum size. For example, if the previous fetch operation experienced a timeout, it means that it took longer than expected to complete, and it likely fetched less data than desired. In response to this situation, the next fetch operation may be more aggressive in catching up to meet the required data transfer or processing rate. To achieve this, the minimum fetch value of a next fetch may be increased by an amount that compensates for the shortfall in the previous fetch. This adjustment aims to ensure that the next fetch fetches more data and progresses at a faster rate to catch up with the expected performance.

Conversely, if the previous fetch operation successfully fetched more data than the minimum requirement, it suggests that the system is ahead of schedule or processing data more efficiently than anticipated. In this case, the next fetch operation can be relaxed. To achieve this, the value of a minimum fetch value of a next fetch may be decreased by an amount that aligns with the excess data fetched in the previous operation. By reducing the minimum fetch requirement, the system can operate more conservatively and avoid over-fetching, which might be unnecessary and could potentially strain system resources.

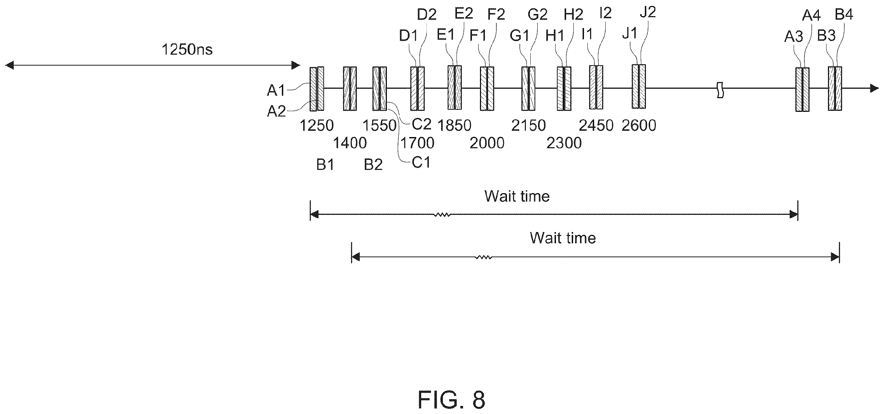

FIG. 8 is a timing diagram illustrating a multi-channel requestor scenario, according to an embodiment.

Referring to FIG. 8, fetch burst operations are performed by ten channels respectively corresponding to A-J. Two instruction bursts A1 and A2 are transmitted by the first channel at the 1250 ns time instance; two instruction bursts B1 and B2 are transmitted by the second channel at the 1400 ns instance; two instruction bursts C1 and C2 are transmitted by the third channel at the 1550 ns instance; two instruction bursts D1 and D2 are transmitted by the fourth channel at the 1700 ns instance; two instruction bursts E1 and E2 are transmitted by the fifth channel at the 1850 ns instance; two instruction bursts F1 and F2 are transmitted by the sixth channel at the 2000 ns instance; two instruction bursts G1 and G2 are transmitted by the seventh channel at the 2150 ns instance; two instruction bursts H1 and H2 are transmitted by the eighth channel at the 2300 ns instance; two instruction bursts I1 and I2 are transmitted by the ninth channel at the 2450 ns instance; and two instruction bursts J1 and J2 are transmitted by the tenth channel at the 2600 ns instance.

An arbitration time is 150 ns and, therefore, each subsequent instruction burst is transmitted from a different channel at 150 ns increments until a timer for one of the channels exceeds a wait time of that channel. Once the timer of one of the channels exceeds the wait time of that channel, then that channel may transmit another instruction burst (e.g., A3 and A4, B3 and B4, etc.). Each channel may have its own wait time, and the wait time of each of the channels may vary. The wait time of each of the channels may be measured between instruction bursts of that channel. The wait time may be based on a minimum fetch threshold, an arbitration time, and a number of channels. The wait time may be rounded up to the next available upstream push command.

To ensure efficient management of arbitration and command fetching, the system may extend the arbitration wait time duration based on the number of input channels and their assigned weights in the arbitration process. For equally weighted channels, the wait time duration may be determined by multiplying the minimum fetch timeout duration of a single channel by the total number of channels. If the minimum fetch for a single channel is set at 300 ns, corresponding to two arbitration cycles at 150 ns each, and there are 10 such channels, the resultant extended minimum fetch timeout duration will be 3000 ns.

In scenarios where channels have different weights, the fetch timeout duration for less prioritized channels may incorporate the sum of the weights of all channels. For example, if the first channel is assigned a weight five times greater than the others, the fetch timeout duration for the second to tenth channels would be 4200 ns, calculated as the sum of the weights (5 for the first channel plus 1 for each of the remaining nine channels) times the single channel minimum fetch time of 300 ns. The first channel, during its initial arbitration, would have a fetch timeout duration of 3000 ns, while subsequent arbitrations for this channel would have a standard duration of 300 ns each.

This adaptive mechanism effectively balances the system's throughput performance with considerations of power consumption, transfer overhead, and resource allocation plans by dynamically adjusting wait times in response to varying arbitration weights and the number of input channels.

Also, the wait time duration may be determined by multiplying the number of minimum fetch counts with the command or request throughput time. To align with the system's operational capabilities, this duration may then be rounded up to the nearest integer of the arbitration time, yielding what is termed the roundup wait time duration.

A key advantage of rounding up the wait time to the arbitration time is the potential reduction in arbitration operation frequency. This reduction is quantified by the integer number of roundup wait time durations that fit into the Arbitration time. Reducing the arbitration operation frequency reduces power consumption, thereby lowering the operation cost, and mitigates the need for high-speed logic design or extensive parallel design structures, effectively reducing design costs.

The baseline wait time duration may be the initial computation duration, which is determined by multiplying the minimum fetch number by the command or request throughput time. The baseline wait time duration may be the fundamental interval at which commands or requests are processed before any adjustments are made.

A roundup multiple may be a factor used to adjust the baseline wait time duration to the nearest whole multiple of the system's arbitration time. This ensures that the wait time aligns with the system's clock (e.g., frequency). The roundup multiple may be calculated by dividing the baseline wait time duration by the arbitration time and then applying a roundup function to reach the nearest integer.

Once the roundup multiple is determined, the roundup wait time duration may be calculated. The roundup wait time duration may be the adjusted wait time that the system will use, which harmonizes the baseline wait time duration with the arbitration time by multiplying the roundup multiple by the arbitration time. This adjusted duration facilitates a reduction in the frequency of arbitration operations, which can lead to improved system efficiency.

The roundup arbitration operation frequency may be obtained by taking the baseline arbitration operation frequency and dividing it by the roundup multiple. This results in a new operation frequency that, because it is rounded, reduces the total number of arbitration operations needed. This has the effect of conserving power and simplifying the system's design.

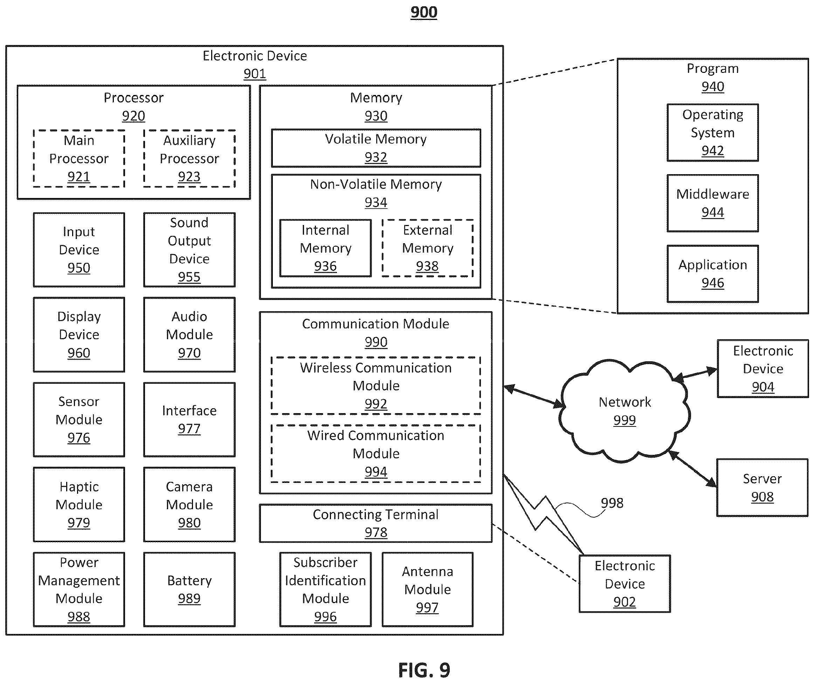

FIG. 9 is a block diagram illustrating an electronic device in a network environment, according to an embodiment.

The electronic device in FIG. 9 may correspond to the host and/or device.

Referring to FIG. 9, the electronic device 901, e.g., a mobile terminal including global positioning system (GPS) functionality, in the network environment 900 may communicate with an electronic device 902 via a first network 998 (e.g., a short-range wireless communication network), or an electronic device 904 or a server 908 via a second network 999 (e.g., a long-range wireless communication network). The electronic device 901 may communicate with the electronic device 904 via the server 908. The electronic device 901 may include a processor 920, a memory 930, an input device 950, a sound output device 955, a display device 960, an audio module 970, a sensor module 976, an interface 977, a haptic module 979, a camera module 980, a power management module 988, a battery 989, a communication module 990, a subscriber identification module (SIM) 996, or an antenna module 997 including a global navigation satellite system (GNSS) antenna. In one embodiment, at least one (e.g., the display device 960 or the camera module 980) of the components may be omitted from the electronic device 901, or one or more other components may be added to the electronic device 901. In one embodiment, some of the components may be implemented as a single IC. For example, the sensor module 976 (e.g., a fingerprint sensor, an iris sensor, or an illuminance sensor) may be embedded in the display device 960 (e.g., a display).

The processor 920 may execute, for example, software (e.g., a program 940) to control at least one other component (e.g., a hardware or a software component) of the electronic device 901 coupled with the processor 920, and may perform various data processing or computations. As at least part of the data processing or computations, the processor 920 may load a command or data received from another component (e.g., the sensor module 976 or the communication module 990) in volatile memory 932, process the command or the data stored in the volatile memory 932, and store resulting data in non-volatile memory 934. The processor 920 may include a main processor 921 (e.g., a central processing unit (CPU) or an application processor, and an auxiliary processor 923 (e.g., a graphics processing unit (GPU), an image signal processor (ISP), a sensor hub processor, or a communication processor (CP)) that is operable independently from, or in conjunction with, the main processor 921. Additionally or alternatively, the auxiliary processor 923 may be adapted to consume less power than the main processor 921, or execute a particular function. The auxiliary processor 923 may be implemented as being separate from, or a part of, the main processor 921.

The auxiliary processor 923 may control at least some of the functions or states related to at least one component (e.g., the display device 960, the sensor module 976, or the communication module 990) among the components of the electronic device 901, instead of the main processor 921 while the main processor 921 is in an inactive (e.g., sleep) state, or together with the main processor 921 while the main processor 921 is in an active state (e.g., executing an application). According to one embodiment, the auxiliary processor 923 (e.g., an image signal processor or a communication processor) may be implemented as part of another component (e.g., the camera module 980 or the communication module 990) functionally related to the auxiliary processor 923.

The memory 930 may store various data used by at least one component (e.g., the processor 920 or the sensor module 976) of the electronic device 901. The various data may include, for example, software (e.g., the program 940) and input data or output data for a command related thereto. The memory 930 may include the volatile memory 932 or the non-volatile memory 934.

The program 940 may be stored in the memory 930 as software, and may include, for example, an operating system (OS) 942, middleware 944, or an application 946.

The input device 950 may receive a command or data to be used by other component (e.g., the processor 920) of the electronic device 901, from the outside (e.g., a user) of the electronic device 901. The input device 950 may include, for example, a microphone, a mouse, or a keyboard.

The sound output device 955 may output sound signals to the outside of the electronic device 901. The sound output device 955 may include, for example, a speaker or a receiver. The speaker may be used for general purposes, such as playing multimedia or recording, and the receiver may be used for receiving an incoming call. According to one embodiment, the receiver may be implemented as being separate from, or a part of, the speaker.

The display device 960 may visually provide information to the outside (e.g., a user) of the electronic device 901. The display device 960 may include, for example, a display, a hologram device, or a projector and control circuitry to control a corresponding one of the display, hologram device, and projector. According to one embodiment, the display device 960 may include touch circuitry adapted to detect a touch, or sensor circuitry (e.g., a pressure sensor) adapted to measure the intensity of force incurred by the touch.

The audio module 970 may convert a sound into an electrical signal and vice versa. According to one embodiment, the audio module 970 may obtain the sound via the input device 950, or output the sound via the sound output device 955 or a headphone of an external electronic device 902 directly (e.g., wiredly) or wirelessly coupled with the electronic device 901.

The sensor module 976 may detect an operational state (e.g., power or temperature) of the electronic device 901 or an environmental state (e.g., a state of a user) external to the electronic device 901, and then generate an electrical signal or data value corresponding to the detected state. The sensor module 976 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 977 may support one or more specified protocols to be used for the electronic device 901 to be coupled with the external electronic device 902 directly (e.g., wiredly) or wirelessly. According to one embodiment, the interface 977 may include, for example, a high definition multimedia interface (HDMI), a universal serial bus (USB) interface, a secure digital (SD) card interface, or an audio interface.

A connecting terminal 978 may include a connector via which the electronic device 901 may be physically connected with the external electronic device 902. According to one embodiment, the connecting terminal 978 may include, for example, an HDMI connector, a USB connector, an SD card connector, or an audio connector (e.g., a headphone connector).

The haptic module 979 may convert an electrical signal into a mechanical stimulus (e.g., a vibration or a movement) or an electrical stimulus which may be recognized by a user via tactile sensation or kinesthetic sensation. According to one embodiment, the haptic module 979 may include, for example, a motor, a piezoelectric element, or an electrical stimulator.

The camera module 980 may capture a still image or moving images. According to one embodiment, the camera module 980 may include one or more lenses, image sensors, image signal processors, or flashes.

The power management module 988 may manage power supplied to the electronic device 901. The power management module 988 may be implemented as at least part of, for example, a power management integrated circuit (PMIC).

The battery 989 may supply power to at least one component of the electronic device 901. According to one embodiment, the battery 989 may include, for example, a primary cell which is not rechargeable, a secondary cell which is rechargeable, or a fuel cell.

The communication module 990 may support establishing a direct (e.g., wired) communication channel or a wireless communication channel between the electronic device 901 and the external electronic device (e.g., the electronic device 902, the electronic device 904, or the server 908) and performing communication via the established communication channel. The communication module 990 may include one or more communication processors that are operable independently from the processor 920 (e.g., the application processor) and supports a direct (e.g., wired) communication or a wireless communication. According to one embodiment, the communication module 990 may include a wireless communication module 992 (e.g., a cellular communication module, a short-range wireless communication module, or a GNSS communication module) or a wired communication module 994 (e.g., a local area network (LAN) communication module or a power line communication (PLC) module). A corresponding one of these communication modules may communicate with the external electronic device via the first network 998 (e.g., a short-range communication network, such as Bluetooth^{™}, wireless-fidelity (Wi-Fi) direct, or a standard of the Infrared Data Association (IrDA)) or the second network 999 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 992 may identify and authenticate the electronic device 901 in a communication network, such as the first network 998 or the second network 999, using subscriber information (e.g., international mobile subscriber identity (IMSI)) stored in the subscriber identification module 996.

The antenna module 997 may transmit or receive a signal or power to or from the outside (e.g., the external electronic device) of the electronic device 901. According to one embodiment, the antenna module 997 may include one or more antennas, and, therefrom, at least one antenna appropriate for a communication scheme used in the communication network, such as the first network 998 or the second network 999, may be selected, for example, by the communication module 990 (e.g., the wireless communication module 992). The signal or the power may then be transmitted or received between the communication module 990 and the external electronic device via the selected at least one antenna.

At least some of the above-described components may be mutually coupled and communicate signals (e.g., commands or data) therebetween via an inter-peripheral communication scheme (e.g., a bus, a general purpose input and output (GPIO), a serial peripheral interface (SPI), or a mobile industry processor interface (MIPI)).

According to one embodiment, commands or data may be transmitted or received between the electronic device 901 and the external electronic device 904 via the server 908 coupled with the second network 999. Each of the electronic devices 902 and 904 may be a device of a same type as, or a different type, from the electronic device 901. All or some of operations to be executed at the electronic device 901 may be executed at one or more of the external electronic devices 902, 904, or 908. For example, if the electronic device 901 should perform a function or a service automatically, or in response to a request from a user or another device, the electronic device 901, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 901. The electronic device 901 may provide the outcome, with or without further processing of the outcome, as at least part of a reply to the request. To that end, a cloud computing, distributed computing, or client-server computing technology may be used, for example.

One embodiment may be implemented as software (e.g., the program 940) including one or more instructions that are stored in a storage medium (e.g., internal memory 936 or external memory 938) that is readable by a machine (e.g., the electronic device 901). For example, a processor of the electronic device 901 may invoke at least one of the one or more instructions stored in the storage medium, and execute it, with or without using one or more other components under the control of the processor. Thus, a machine may be operated to perform at least one function according to the at least one instruction invoked. The one or more instructions may include code generated by a complier or code executable by an interpreter. A machine-readable storage medium may be provided in the form of a non-transitory storage medium. The term "non-transitory" indicates that the storage medium is a tangible device, and does not include a signal (e.g., an electromagnetic wave), but this term does not differentiate between where data is semi-permanently stored in the storage medium and where the data is temporarily stored in the storage medium.

According to one embodiment, a method of the disclosure may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to one embodiment, each component (e.g., a module or a program) of the above-described components may include a single entity or multiple entities. One or more of the above-described components may be omitted, or one or more other components may be added. Alternatively or additionally, a plurality of components (e.g., modules or programs) may be integrated into a single component. In this case, the integrated component may still perform one or more functions of each of the plurality of components in the same or similar manner as they are performed by a corresponding one of the plurality of components before the integration. Operations performed by the module, the program, or another component may be carried out sequentially, in parallel, repeatedly, or heuristically, or one or more of the operations may be executed in a different order or omitted, or one or more other operations may be added.

## Claims

1. A system (101) for managing arbitration (154) and command fetching (155) in a data communication system, comprising:
an input channel (153a, 153b, 153c) configured to issue commands (152a, 152b, 152c); and
a controller (105) configured to:
determine if a number of command requests is greater than or equal to a minimum fetch threshold, and a number of resources to receive the command requests is greater than or equal to a resource threshold,
initialize a wait timer,
determine if the wait timer is greater than or equal to a predetermined wait time duration, wherein the predetermined wait time duration is greater than an arbitration time, and
transmit the command requests in response to the number of the command requests being greater than or equal to the minimum fetch threshold, and the number of resources to receive the command requests being greater than or equal to the resource threshold, and
transmit the command requests in response to the wait timer being greater than or equal to the predetermined wait time duration, if the wait timer reaches the predetermined wait time duration prior to the number of the command requests being greater than or equal to the minimum fetch threshold, and the number of resources to receive the command requests being greater than or equal to the resource threshold.

2. The system of claim 1, wherein the minimum fetch threshold is based on a number of upstream command requests and the resource threshold is based on a number of downstream resources.

3. The system (101) of Claim 2, wherein the command requests are transmitted in response to the number of upstream command requests and the number of downstream resources being greater than or equal to the minimum fetch threshold.

4. The system (101) of any one of Claims 1 to 3, wherein the minimum fetch threshold is calculated based on an executed fetch value.

5. The system (101) of Claim 4, wherein the controller (105) is further configured to:
increase the minimum fetch threshold in response to the executed fetch value being less than the minimum fetch threshold due to a null operation.

6. The system (101) of Claim 4 or 5, wherein the controller (105) is further configured to:
decrease the minimum fetch threshold in response to the executed fetch value being greater than the minimum fetch threshold or in response to an executed resource count being greater than an executed resource threshold.

7. The system (101) of any one of Claims 1 to 6, wherein the input channel (153a, 153b, 153c) comprises a plurality of input channels (153a, 153b, 153c) having a wait time duration.

8. The system (101) of any one of Claims 1 to 7, wherein the controller (105) is further configured to:
disable or reduce the minimum fetch threshold in response to a host queue depth being less than the minimum fetch threshold.

9. A method for managing arbitration (154) and command fetching (155) in a data communication system, the method comprising:
determining if a number of command requests is greater than or equal to a minimum fetch threshold, and a number of resources to receive the command requests is greater than or equal to a resource threshold,
initializing a wait timer,
determining if the wait timer is greater than or equal to a predetermined wait time duration, wherein the predetermined wait time duration is greater than an arbitration time, and
transmitting the command requests in response to the number of the command requests being greater than or equal to the minimum fetch threshold, and the number of resources to receive the command requests being greater than or equal to the resource threshold, and
transmitting the command requests in response to the wait timer being greater than or equal to a predetermined wait time duration if the wait timer reaches the predetermined wait time duration prior to the number of the command requests being greater than or equal to the minimum fetch threshold, and the number of resources to receive the command requests being greater than or equal to the resource threshold.

10. The method of claim 9, wherein the minimum fetch threshold is based on a number of upstream command requests and the resource threshold is based on a number of downstream resources.

11. The method of Claim 10, wherein the command requests are transmitted in response to the number of upstream command requests and the number of downstream resources being greater than or equal to the minimum fetch threshold.

## Patentansprüche

1. Ein System (101) zur Verwaltung der Arbitrierung (154) und des Abrufens von Befehlen (155) in einem Datenkommunikationssystem, umfassend:
einen Eingangskanal (153a, 153b, 153c), welcher derart konfiguriert ist, dass er Befehle (152a, 152b, 152c) ausgibt; und
eine Steuerung (105), welche derart konfiguriert ist, dass sie:
feststellt, ob eine Anzahl von Befehlsanforderungen größer oder gleich einem minimalen Abrufschwellenwert ist und eine Anzahl von Ressourcen zum Empfangen der Befehlsanforderungen größer oder gleich einem Ressourcenschwellenwert ist,
einen Warte-Timer initialisiert,
feststellt, ob der Warte-Timer größer oder gleich einer vorbestimmten Wartezeitdauer ist, wobei die vorbestimmte Wartezeitdauer größer als eine Arbitrierungszeit ist, und
die Befehlsanforderungen überträgt, wenn die Anzahl der Befehlsanforderungen größer oder gleich dem minimalen Abrufschwellenwert ist und die Anzahl der Ressourcen zum Empfangen der Befehlsanforderungen größer oder gleich dem Ressourcenschwellenwert ist, und
die Befehlsanforderungen überträgt, wenn der Warte-Timer größer oder gleich der vorgegebenen Wartezeitdauer ist, sofern der Warte-Timer die vorgegebene Wartezeitdauer erreicht, bevor die Anzahl der Befehlsanforderungen größer oder gleich dem minimalen Abrufschwellenwert ist und die Anzahl der Ressourcen zum Empfangen der Befehlsanforderungen größer oder gleich dem Ressourcenschwellenwert ist.

2. Das System nach Anspruch 1, wobei der minimale Abrufschwellenwert auf einer Anzahl von Upstream-Befehlsanforderungen basiert und der Ressourcenschwellenwert auf einer Anzahl von Downstream-Ressourcen basiert.

3. Das System (101) nach Anspruch 2, wobei die Befehlsanforderungen übertragen werden, wenn die Anzahl der Upstream-Befehlsanforderungen und die Anzahl der Downstream-Ressourcen größer oder gleich dem minimalen Abrufschwellenwert sind.

4. Das System (101) nach einem der Ansprüche 1 bis 3, wobei der minimale Abrufschwellenwert auf der Grundlage eines ausgeführten Abrufwerts berechnet wird.

5. Das System (101) nach Anspruch 4, wobei die Steuerung (105) ferner derart konfiguriert ist, dass sie:
den minimalen Abrufschwellenwert erhöht, wenn der ausgeführte Abrufwert aufgrund einer Nulloperation kleiner als der minimale Abrufschwellenwert ist.

6. Das System (101) nach Anspruch 4 oder 5, wobei die Steuerung (105) ferner derart konfiguriert ist, dass sie:
den minimalen Abrufschwellenwert verringert, wenn der Wert des ausgeführten Abrufs größer ist als der minimale Abrufschwellenwert oder wenn die Anzahl der ausgeführten Ressourcen größer ist als ein Schwellenwert für ausgeführte Ressourcen.

7. Das System (101) nach einem der Ansprüche 1 bis 6, wobei der Eingangskanal (153a, 153b, 153c) eine Mehrzahl von Eingangskanälen (153a, 153b, 153c) umfasst, die eine Wartezeitdauer aufweisen.

8. Das System (101) nach einem der Ansprüche 1 bis 7, wobei die Steuerung (105) ferner derart konfiguriert ist, dass sie:
den Mindestabrufschwellenwert deaktiviert oder verringert, wenn die Warteschlangentiefe des Hosts kleiner als der Mindestabrufschwellenwert ist.

9. Ein Verfahren zur Verwaltung von Arbitrierung (154) und Abrufen von Befehlen (155) in einem Datenkommunikationssystem, wobei das Verfahren umfasst:
Feststellen, ob eine Anzahl von Befehlsanforderungen größer oder gleich einem minimalen Abrufschwellenwert ist und eine Anzahl von Ressourcen zum Empfangen der Befehlsanforderungen größer oder gleich einem Ressourcenschwellenwert ist,
Initialisieren eines Wartezeitgebers,
Feststellen, ob der Wartezeitgeber größer oder gleich einer vorbestimmten Wartezeitdauer ist, wobei die vorbestimmte Wartezeitdauer größer als eine Arbitrierungszeit ist, und
Senden der Befehlsanforderungen als Reaktion darauf, dass die Anzahl der Befehlsanforderungen größer oder gleich dem minimalen Abrufschwellenwert ist und die Anzahl der Ressourcen zum Empfangen der Befehlsanforderungen größer oder gleich dem Ressourcenschwellenwert ist, und
Senden der Befehlsanforderungen als Reaktion darauf, dass der Warte-Timer größer oder gleich einer vorbestimmten Wartezeitdauer ist, wenn der Warte-Timer die vorbestimmte Wartezeitdauer erreicht, bevor die Anzahl der Befehlsanforderungen größer oder gleich dem minimalen Abrufschwellenwert ist und die Anzahl der Ressourcen zum Empfangen der Befehlsanforderungen größer oder gleich dem Ressourcenschwellenwert ist.

10. Das Verfahren nach Anspruch 9, wobei der minimale Abrufschwellenwert auf einer Anzahl von Upstream-Befehlsanforderungen basiert und der Ressourcenschwellenwert auf einer Anzahl von Downstream-Ressourcen basiert.

11. Das Verfahren nach Anspruch 10, wobei die Befehlsanforderungen übertragen werden, wenn die Anzahl der Upstream-Befehlsanforderungen und die Anzahl der Downstream-Ressourcen größer oder gleich dem minimalen Abrufschwellenwert sind.

## Revendications

1. Un système (101) destiné à gérer l'arbitrage (154) et la récupération de commandes (155) dans un système de communication de données, comprenant :
un canal d'entrée (153a, 153b, 153c) configuré pour émettre des commandes (152a, 152b, 152c) ; et
un contrôleur *(105)* configuré pour :
déterminer si un nombre de demandes de commande est supérieur ou égal à un seuil de récupération minimal, et si un nombre de ressources pour recevoir les demandes de commande est supérieur ou égal à un seuil de ressources,
initialiser un temporisateur d'attente,
déterminer si le temporisateur d'attente est supérieur ou égal à une durée d'attente prédéterminée, dans lequel la durée d'attente prédéterminée est supérieure à un temps d'arbitrage, et
transmettre les requêtes de commande en réponse au fait que le nombre de requêtes de commande est supérieur ou égal au seuil de récupération minimal, et que le nombre de ressources pour recevoir les requêtes de commande est supérieur ou égal au seuil de ressources, et
transmettre les requêtes de commande en réponse au fait que le temporisateur d'attente est supérieur ou égal à la durée d'attente prédéterminée, si le temporisateur d'attente atteint la durée d'attente prédéterminée avant que le nombre de requêtes de commande ne soit supérieur ou égal au seuil de récupération minimal, et que le nombre de ressources pour recevoir les requêtes de commande ne soit supérieur ou égal au seuil de ressources.

2. Le système selon la revendication 1, dans lequel le seuil minimal de récupération est basé sur un nombre de requêtes de commande en amont et le seuil de ressources est basé sur un nombre de ressources en aval.

3. Le système (101) selon la revendication 2, dans lequel les requêtes de commande sont transmises lorsque le nombre de requêtes de commande en amont et le nombre de ressources en aval sont supérieurs ou égaux au seuil minimal de récupération.

4. Le système (101) selon l'une quelconque des revendications 1 à 3, dans lequel le seuil de récupération minimal est calculé sur la base d'une valeur de récupération exécutée.

5. Le système (101) selon la revendication 4, dans lequel le contrôleur (105) est en outre configuré pour :
augmenter le seuil de récupération minimal lorsque la valeur de récupération exécutée est inférieure au seuil de récupération minimal en raison d'une opération nulle.

6. Le système (101) selon la revendication 4 ou 5, dans lequel le contrôleur (105) est en outre configuré pour :
réduire le seuil minimal de récupération lorsque la valeur de récupération exécutée est supérieure au seuil minimal de récupération ou lorsque le nombre de ressources exécutées est supérieur à un seuil de ressources exécutées.

7. Le système (101) selon l'une quelconque des revendications 1 à 6, dans lequel le canal d'entrée (153a, 153b, 153c) comprend une pluralité de canaux d'entrée (153a, 153b, 153c) ayant une durée d'attente.

8. Le système (101) selon l'une quelconque des revendications 1 à 7, dans lequel le contrôleur (105) est en outre configuré pour :
désactiver ou réduire le seuil de récupération minimal en réponse au fait que la profondeur de la file d'attente de l'hôte est inférieure au seuil de récupération minimal.

9. Le procédé de gestion de l'arbitrage (154) et de la récupération de commandes (155) dans un système de communication de données, le procédé comprenant :
déterminer si un nombre de demandes de commande est supérieur ou égal à un seuil de récupération minimal, et si un nombre de ressources pour recevoir les demandes de commande est supérieur ou égal à un seuil de ressources,
initialiser un temporisateur d'attente,
déterminer si le temporisateur d'attente est supérieur ou égal à une durée d'attente prédéterminée, dans laquelle la durée d'attente prédéterminée est supérieure à un temps d'arbitrage, et
transmettre les demandes de commande en réponse au fait que le nombre de demandes de commande est supérieur ou égal au seuil de récupération minimal, et que le nombre de ressources pour recevoir les demandes de commande est supérieur ou égal au seuil de ressources, et
transmettre les requêtes de commande en réponse au fait que le temporisateur d'attente est supérieur ou égal à une durée d'attente prédéterminée si le temporisateur d'attente atteint la durée d'attente prédéterminée avant que le nombre de requêtes de commande ne soit supérieur ou égal au seuil de récupération minimal, et que le nombre de ressources pour recevoir les requêtes de commande ne soit supérieur ou égal au seuil de ressources.

10. Le procédé selon la revendication 9, dans lequel le seuil de récupération minimal est basé sur un nombre de requêtes de commande en amont et le seuil de ressources est basé sur un nombre de ressources en aval.

11. Le procédé selon la revendication 10, dans lequel les requêtes de commande sont transmises lorsque le nombre de requêtes de commande en amont et le nombre de ressources en aval sont supérieurs ou égaux au seuil de récupération minimal.
